**Europäisches Patentamt**

**European Patent Office**

**Office européen des brevets**

(11) Veröffentlichungsnummer: **0 057 754**
A2

## (12) EUROPÄISCHE PATENTANMELDUNG

(21) Anmeldenummer: **81108728.7**

(22) Anmeldetag: **22.10.81**

(51) Int. Cl.³: **G 09 G 1/00**

(30) Priorität: **10.02.81 DE 3104675**

(43) Veröffentlichungstag der Anmeldung:
**18.08.82 Patentblatt 82/33**

(84) Benannte Vertragsstaaten:
**AT CH FR GB LI NL SE**

(71) Anmelder: **SIEMENS AKTIENGESELLSCHAFT Berlin und München**
**Postfach 22 02 61**
**D-8000 München 22(DE)**

(72) Erfinder: **Popp, Otmar**
**Willibaldstrasse 148**
**D-8000 München 21(DE)**

(72) Erfinder: **Altmann, Helmut, Dipl.-Ing.**
**Kurfürstenstrasse 18**
**D-8034 Germering(DE)**

(72) Erfinder: **Diaz, Hernando**
**Kurfürstenstrasse 16**
**D-8034 Germering(DE)**

(54) Verfahren und Anordnung zum Darstellen von Steuerzeichen an einem Bildschirm einer Anzeigeeinrichtung.

(57) Die Erfindung bezieht sich auf ein Verfahren und eine Anordnung zum Darstellen von Steuerzeichen, die die Eigenschaften von an einem Bildschirm (BS) einer Anzeigeeinheit (AE) darstellbaren alphanumerischen und/oder graphischen Zeichen bestimmen. Den Steuerzeichen zugeordnete Codewörter sind zusätzlich zu den darstellbaren Zeichen zugeordneten Codewörtern in einem Seitenspeicher (SP) gespeichert. Um die Steuerzeichen ändern zu können, werden diese dadurch angezeigt, daß nach dem Betätigen eines den Steuerzeichen zugeordneten Schalters an einer Tastatur (TA) an allen Stellen am Bildschirm (BS), die einem Steuerzeichen zugeordnet sind, Sonderzeichen dargestellt werden, die die jeweiligen Steuerzeichen kennzeichnen.

FIG 3

EP 0 057 754 A2

SIEMENS AKTIENGESELLSCHAFT          Unser Zeichen
Berlin und München                  VPA 81 P 6 7 0 7 E

0057754

**Verfahren und Anordnung zum Darstellen von Steuerzeichen
an einem Bildschirm einer Anzeigeeinrichtung**

Die Erfindung bezieht sich auf ein Verfahren und eine
Anordnung zum Darstellen von Steuerzeichen an einem Bildschirm einer Anzeigeeinrichtung, die einen Seitenspeicher
enthält, in dem Codewörter speicherbar sind, die am Bildschirm anzeigbaren alphanumerischen und/oder graphischen
Zeichen und die Eigenschaften der Zeichen bestimmenden
Steuerzeichen zugeordnet sind, die eine Tastatur enthält,
mittels der die den Zeichen und den Steuerzeichen zugeordneten Codewörter in den Seitenspeicher eingebbar sind
und die eine mit einem Zeichengenerator versehene Bildsteuereinheit enthält, die die Darstellung der Zeichen am
Bildschirm steuert.

Bei dem Telekommunikationsdienst "Bildschirmtext" ("Video-
tex-Interactive") ist es möglich, über eine Fernsprechleitung mit Hilfe eines Fernsehgerätes in einer Zentrale
gespeicherte Informationen abzurufen. Die Informationen
werden am Bildschirm des als Anzeigeeinrichtung dienenden
Fernsehgerätes dargestellt. Es kann eine Darstellung von
alphanumerischen Zeichen und/oder aus graphischen Zeichen
gebildeten Mustern erfolgen.

Für die Informationsanbieter sind Editiereinrichtungen
vorgesehen, mittels denen die Informationen in Form von
Bildschirminhalten aufbereitet werden. Anschließend werden die Bildschirminhalte zur Zentrale übertragen und
können dann von den Teilnehmern abgerufen werden.

Ein Bildschirminhalt wird als Seite bezeichnet. Die Seite
enthält beispielsweise 960 Zeichenfelder, die in 24 Zeilen

Ret 1 Kdg / 5. Febr. 1981

mit jeweils 40 Zeichenfeldern angeordnet sind. Bei einer
Darstellung von alphanumerischen Zeichen ist in jedem
Zeichenfeld ein Zeichen dargestellt. Das Zeichenfeld
besteht beispielsweise aus 8x10 oder 8x12 Bildpunkten,
mit denen die einzelnen Zeichen dargestellt werden. Die
Darstellung der graphischen Muster erfolgt dadurch, daß
jedes Zeichenfeld ein graphisches Zeichen enthält, das
aus 2x3 Graphikelementen gebildet wird. Die graphischen
Muster werden aus den Kombinationen von hellen und dunklen Graphikelementen in den verschiedenen Farben aufgebaut, wobei innerhalb eines Zeichenfeldes die Farben
nicht geändert werden können.

Die Anzeigeeinrichtung enthält eine Bildsteuereinheit, die
die Darstellung der Zeichen am Bildschirm steuert. Die
Bildsteuereinheit enthält einen Zeichengenerator, in dem
ein vorgegebener Vorrat an alphanumerischen und graphischen Zeichen gespeichert ist. Unter Verwendung von Codewörtern, die in einem Seitenspeicher gespeichert sind und
die die Adressen des Zeichengenerators darstellen, werden
den Bildpunkten der Zeichen oder den Graphikelementen
zugeordnete Datenwörter aus den Zeichengeneratoren ausgelesen und einer den Bildschirm enthaltenden Anzeigeeinheit zugeführt.

Die Eigenschaften der darstellbaren Zeichen werden durch
Steuerzeichen bestimmt, die ebenfalls in Form von Codewörtern in dem Seitenspeicher gespeichert sind. Die Steuerzeichen geben beispielsweise an, in welcher Farbe die
Zeichen dargestellt werden sollen, ob die Zeichen blinkend, nicht blinkend, in normaler Höhe oder in doppelter
Höhe dargestellt werden sollen. Bei einer seriellen
Codierung der Zeichen und der Steuerzeichen ist jeder
Stelle am Bildschirm ein für ein Codewort vorgesehener
Speicherbereich im Seitenspeicher zugeordnet. Falls in
einem Speicherbereich ein Codewort eines Steuerzeichens gespeichert ist, wird an der entsprechenden Stelle am Bildschirm im allgemeinen kein Zeichen dargestellt. Die Zuordnung der Codewörter zu den Zeichen und den Steuerzeichen ist für die serielle Codierung beispielsweise aus der Zeitschrift "Funkschau" (1977), Heft 18, Seiten 78-82 bekannt.

Bei einer parallelen Codierung wird die Anzahl der Binärzeichen der den darstellbaren Zeichen zugeordneten Codewörter derart vergrößert, daß jedem Zeichen als Begleitinformation ein Steuerzeichen beigegeben werden kann. In diesem Fall entfallen die für die Steuerzeichen vorgesehenen Lücken und an allen Stellen des Bildschirms können Zeichen dargestellt werden. Es ist auch möglich, die parallele Codierung mit der seriellen Codierung zu kombinieren.

Da die Steuerzeichen nicht angezeigt werden und sich bei der seriellen Codierung auf dem Bildschirm damit nicht von dem Zeichen "Zwischenraum" unterscheiden, ist es bei der Erstellung oder Änderung eines Bildschirminhalts nicht möglich, die Positionen bereits eingegebener Steuerzeichen ohne weiteres zu erkennen.

Es wäre denkbar, nach dem Betätigen einer entsprechenden Taste an einer für die Erstellung oder Bearbeitung des Bildschirminhalts vorgesehenen Tastatur an allen Stellen, an denen Steuerzeichen gespeichert sind, ein Sonderzeichen, beispielsweise die Schreibmarke, anzuzeigen. Falls mehrere Steuerzeichen aufeinanderfolgend gespeichert sind, ist es auch in diesem Fall nicht möglich, die Position eines bestimmten Steuerzeichens zu erkennen, um beispielsweise nur dieses ändern zu können.

Es ist auch bereits bekannt, in einer zusätzlichen Anzeigezeile am unteren Rand des Bildschirms immer dann einen ein Steuerzeichen kennzeichnenden Text anzuzeigen, wenn die Schreibmarke am Bildschirm an eine Stelle positioniert wird, der ein Steuerzeichen zugeordnet ist. Auf diese Weise kann die Position eines zu ändernden Steuerzeichens erkannt werden. Falls das Steuerzeichen jedoch erst an einer anderen Stelle wirksam wird, muß dieses Steuerzeichen erst mittels der Schreibmarke gesucht werden. Außerdem ist ein verhältnismäßig großer Aufwand erforderlich, da am Bildschirm die zusätzliche Anzeigezeile dargestellt werden muß.

Der Erfindung liegt daher die Aufgabe zugrunde, ein Verfahren anzugeben, mit dem auf einfache Weise und sehr schnell die einem bestimmten Steuerzeichen zugeordnete Stelle am Bildschirm einer Anzeigeeinrichtung ermittelt werden kann.

Erfindungsgemäß wird die Aufgabe bei dem Verfahren der eingangs genannten Art dadurch gelöst, daß nach dem Betätigen eines den Steuerzeichen zugeordneten Schalters an der Tastatur an allen Stellen am Bildschirm, die einem Steuerzeichen im Seitenspeicher zugeordnet sind, Sonderzeichen dargestellt werden, die die jeweiligen Steuerzeichen kennzeichnen.

Das Verfahren gemäß der Erfindung hat den Vorteil, daß die Erstellung, die Korrektur und die Aktualisierung eines Bildschirminhalts auf einfache Weise und sehr schnell durchgeführt werden kann, da die den einzelnen Steuerzeichen zugeordneten Stellen am Bildschirm unmittelbar angezeigt werden.

Um eine eindeutige Zuordnung der dargestellten Zeichen zu den Steuerzeichen zu erreichen, ist es vorteilhaft,

81 P 5707 E

wenn während der Darstellung der Sonderzeichen auch die alphanumerischen und/oder graphischen Zeichen dargestellt werden. Unter bestimmten Umständen kann es auch vorteilhaft sein, daß während der Darstellung der Sonderzeichen die Darstellung der alphanumerischen und/oder graphischen Zeichen gesperrt wird.

Um dem Benutzer am Bildschirm die Funktion des Steuerzeichens anzeigen zu können, ist es günstig, wenn gleichzeitig mit der Darstellung der Sonderzeichen am Bildschirm in einer zusätzlichen Anzeigezeile die entsprechenden Steuerzeichen kennzeichnende Texte dargestellt werden. Beispielsweise wird gleichzeitig mit der Darstellung des Sonderzeichens "Bl" als Text das Wort "blinken" in der zusätzlichen Anzeigezeile angezeigt.

Ein weiterer Zeichengenerator oder eine Erweiterung des bereits vorhandenen Zeichengenerators ist nicht erforderlich, wenn als Sonderzeichen im Zeichengenerator gespeicherte Zeichen vorgesehen sind, die in besonderer Weise dargestellt werden. Zweckmäßigerweise werden als Sonderzeichen diejenigen alphanumerischen Zeichen verwendet, deren Codewörter weitgehend mit den Codewörtern der Steuerzeichen übereinstimmen. Die Darstellung kann beispielsweise dadurch erfolgen, daß die Farbe des Zeichens und des Hintergrunds vertauscht wird. Auch kann das Zeichen mit einem Unterstrich versehen werden, um es von den normalen anzeigbaren alphanumerischen Zeichen zu unterscheiden.

Die Funktion des Steuerzeichens kann für den Benutzer auch dadurch am Bildschirm kenntlich gemacht werden, daß als Sonderzeichen weitere Zeichen vorgesehen sind, die die Funktion des entsprechenden Steuerzeichens mnemotechnisch abgekürzt angeben.

Eine vorteilhafte Ausführungsform einer Schaltungsanordnung zur Durchführung des Verfahrens wird erreicht, wenn eine Schaltstufe vorgesehen ist, der bei der Darstellung der den Steuerzeichen zugeordneten Stellen am Bildschirm von der Tastatur ein Signal zugeführt wird und die beim Auslesen eines einem Steuerzeichen zugeordneten Codewortes aus dem Seitenspeicher an die Bildsteuereinheit ein die Darstellung des Sonderzeichens am Bildschirm auslösendes Signal abgibt.

Falls als Sonderzeichen Zeichen vorgesehen sind, die die Funktion der Steuerzeichen mnemotechnisch abgekürzt angeben, ist es vorteilhaft, wenn ein weiterer Zeichengenerator vorgesehen ist, in dem den Sonderzeichen zugeordnete Datenwörter gespeichert sind und der die Datenwörter an die Bildsteuereinheit abgibt, wenn den Steuerzeichen zugeordnete Codewörter aus dem Seitenspeicher ausgelesen werden.

Im folgenden wird eine Durchführung des erfindungsgemäßen Verfahrens anhand von Zeichnungen näher erläutert. Es zeigen:

Figur 1 einen Ausschnitt aus einer Anzeigezeile an einem Bildschirm und die entsprechenden Speicherbereiche in einem Seitenspeicher,

Figur 2 einen Ausschnitt aus der Anzeigezeile am Bildschirm und die entsprechenden Speicherbereiche im Seitenspeicher,

Figur 3 Ausschnitte der Anzeigezeile am Bildschirm,

Figur 4 ein Blockschaltbild einer Schaltungsanordnung zur Durchführung des Verfahrens.

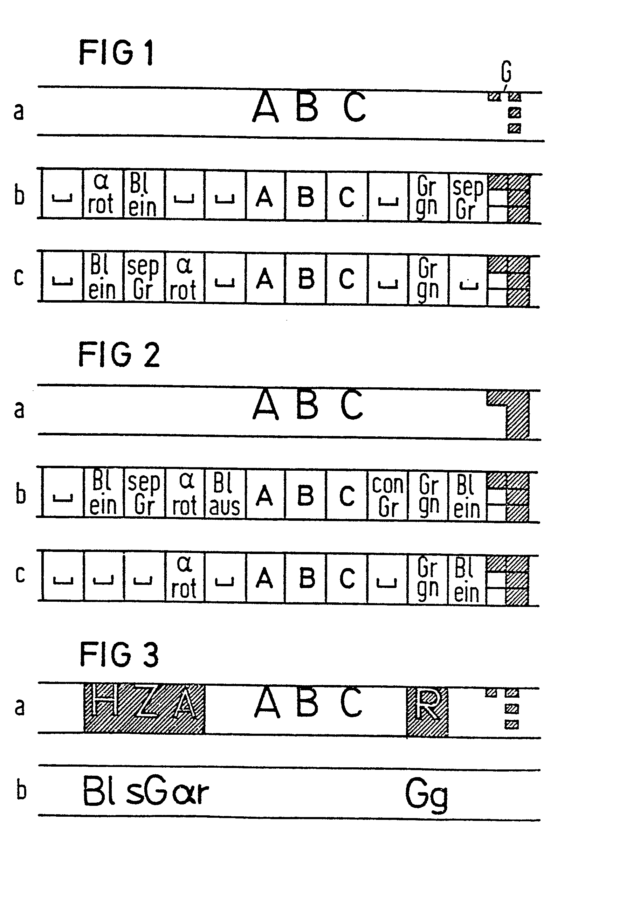

Bei der in Figur 1 bei a dargestellten Anzeigezeile wird angenommen, daß alphanumerische Zeichen "ABC" rot und blinkend dargestellt werden und ein graphisches Zeichen

G grün und blinkend dargestellt wird. In dem bei b dargestellten Ausschnitt aus dem Seitenspeicher sind die entsprechenden Codewörter für die alphanumerischen Zeichen "ABC" und das graphische Zeichen G sowie zugehörige Steuerzeichen dargestellt. Die Codewörter sind binärcodiert gespeichert, jedoch aus Gründen der Übersichtlichkeit sind sie durch mnemotechnische Abkürzungen bzw. durch graphische Darstellungen wiedergegeben. Nach einem Codewort für das Zeichen "Zwischenraum" ist jeweils ein Codewort für das Steuerzeichen "α rot" (alphanumerisches Zeichen rot) bzw. "Bl ein" (blinkend) im Seitenspeicher gespeichert. Nach zwei weiteren Codewörtern für das Zeichen "Zwischenraum" folgen die Codewörter für die alphanumerischen Zeichen "ABC". Anschließend folgen die Codewörter für das Zeichen "Zwischenraum", die Steuerzeichen "Gr gn" (graphisches Zeichen grün) und "sep Gr" (punktförmiges graphisches Zeichen, separated graphics) und für das graphische Zeichen G. Die Steuerzeichen "α rot" und "Bl ein" veranlassen die blinkende Darstellung der alphanumerischen Zeichen "ABC" in roter Farbe. In entsprechender Weise veranlassen die Steuerzeichen "Gr gn" und "sep Gr" die Darstellung des graphischen Zeichens G in grüner Farbe und mit punktförmigen Elementen.

Die gleiche Darstellung am Bildschirm wird auch erreicht, wenn, wie bei d gezeigt, das Steuerzeichen "sep Gr" vor den alphanumerischen Zeichen "ABC" angeordnet wird. In jedem Fall wird es erst an der Stelle wirksam, an der das graphische Zeichen G dargestellt wird. Bei einer Darstellung am Bildschirm entsprechend der bei a dargestellten Anzeigezeile ist nun nicht zu erkennen, wo und in welcher Reihenfolge die einzelnen Steuerzeichen angeordnet sind, so daß eine Korrektur oder Aktualisierung der Anzeigezeile nicht ohne weiteres möglich ist.

Bei der Darstellung in Figur 2 wird angenommen, daß die
alphanumerischen Zeichen "ABC" nicht mehr blinkend dargestellt werden sollen und daß, wie bei a dargestellt, das
graphische Zeichen G aus flächenförmigen Elementen und
nicht mehr aus punktförmigen Elementen dargestellt werden
soll. Die Änderung kann dadurch erfolgen, daß, wie bei
b dargestellt, vor den alphanumerischen Zeichen "ABC"
das Steuerzeichen "Bl aus" (nicht blinkend) eingefügt
wird und daß vor dem graphischen Zeichen G die Steuerzeichen "con Gr" ( flächenförmiges graphisches Zeichen,
contiguous graphics) und "Bl ein" eingefügt werden. Falls
die Positionen der einzelnen Steuerzeichen jedoch bekannt
sind, ist es möglich, das gleiche Ergebnis dadurch zu erreichen, daß die Steuerzeichen "Bl ein" und "sep Gr" gelöscht werden und daß vor dem graphischen Zeichen G das
Steuerzeichen "Bl ein" eingefügt wird.

Um den in Figur 1 bei c dargestellten Speicherinhalt in
den in Figur 2 bei c dargestellten Speicherinhalt abändern zu können, ist es erforderlich, die Positionen der
Steuerzeichen zu ermitteln. Gemäß dem Verfahren wird an
der Tastatur eine Taste betätigt, die eine Darstellung
von den Steuerzeichen zugeordneten Stellen am Bildschirm
durch Sonderzeichen veranlaßt. Während der Darstellung
der Sonderzeichen ist es möglich, die Darstellung der
übrigen Zeichen zu sperren.

Wie in Figur 3 bei a dargestellt ist, werden die Steuerzeichen durch Sonderzeichen dargestellt, die alphanumerische Zeichen enthalten. Um diese alphanumerischen Zeichen
von den am Bildschirm normalerweise darzustellenden
alphanumerischen Zeichen unterscheiden zu können, werden
sie entweder invers, d.h. unter Vertauschung von Hinter-
und Vordergrundfarbe oder mit einem Unterstrich versehen
dargestellt. Für die Anzeigeeinrichtung ist kein weiterer

EP 0 0957754

Zeichengenerator erforderlich, wenn als Sonderzeichen beispielsweise diejenigen alphanumerischen Zeichen ausgewählt werden, deren Codewörter sich möglichst wenig von den Codewörtern der entsprechenden Steuerzeichen unterscheiden. Beispielsweise unterscheidet sich das Codewort für das Steuerzeichen "Bl ein" nur im höchstwertigen Binärzeichen von dem alphanumerischen Zeichen "H". Um dem Benutzer die Zuordnung von den Sonderzeichen zu den Steuerzeichen zu erleichtern, ist es möglich, in einer zusätzlichen Anzeigezeile am Bildschirm in an sich bekannter Weise einen erklärenden Text für die aufgerufenen Steuerzeichen anzuzeigen.

Eine weitere Möglichkeit der Ausgestaltung der Sonderzeichen besteht darin, wie bei b gezeigt, mnemotechnische Abkürzungen des Steuerzeichens an der entsprechenden Stelle dargestellt werden. Hierzu ist jedoch ein weiterer Zeichengenerator oder eine Erweiterung des vorhandenen Zeichengenerators erforderlich, da jeweils zwei alphanumerische Zeichen an einem Zeichenplatz angeordnet sind.

Nach dem Betätigen der entsprechenden Taste an der Tastatur werden unter Verwendung des Verfahrens alle Steuerzeichen am Bildschirm gleichzeitig angezeigt. Der Benutzer kann nun bei einer Änderung des Bildschirminhalts die Schreibmarke an die entsprechende Stelle am Bildschirm positionieren und das jeweilige Steuerzeichen auf einfache Weise ändern.

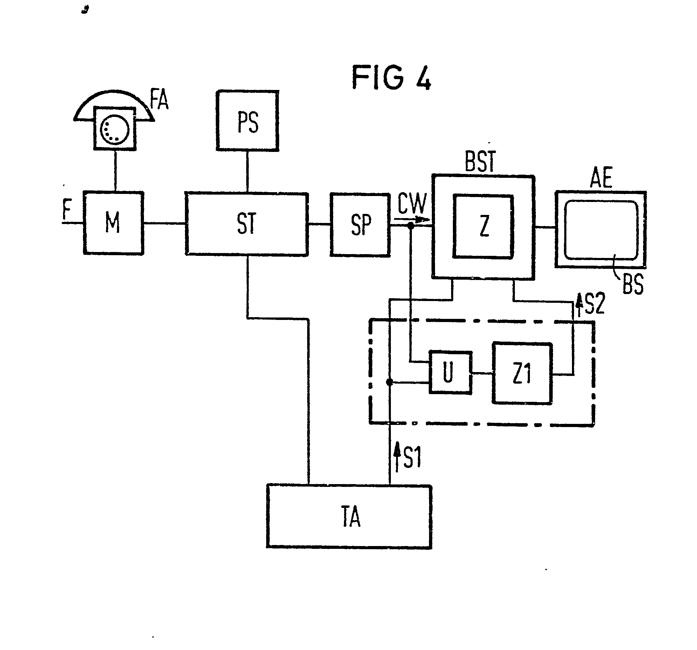

Die in Figur 4 dargestellte Anzeigeeinrichtung, die für den Telekommunikationsdienst " Bildschirmtext" vorgesehen ist, ist über einen Modem M mit einer Fernsprechleitung F verbunden. An dem Modem M ist in bekannter Weise ein Fernsprechapparat FA angeschlossen. Mit Hilfe der Anzeigeeinrichtung ist es einerseits möglich, über die Fernsprechleitung F Informationen von einer Zentrale abzurufen und an einem Bildschirm BS einer Anzeigeeinheit AE darzustellen. Andererseits ist es auch möglich, mittels einer Tastatur TA Bildschirminhalte aufzubauen oder zu korrigieren und sie über die Fernsprechleitung F zur Zentrale zu übertragen. Weitere Bildschirminhalte können in einem peripheren Speicher PS gespeichert sein.

Die Anzeigeeinrichtung enthält eine Steuereinheit ST, die den zeitlichen Ablauf steuert und üblicherweise einen Mikroprozessor enthält. An der Steuereinheit ST ist die Tastatur TA angeschlossen. Weiterhin enthält die Anzeigeeinrichtung einen Seitenspeicher SP, in dem Codewörter CW mindestens eines Bildschirminhalts, einer Seite, gespeichert sind. Dem Seitenspeicher SP ist eine Bildsteuereinheit BST nachgeschaltet, die in Abhängigkeit vom Inhalt des Seitenspeichers Videosignale an die Anzeigeeinheit AE abgibt. Die Bildsteuereinheit BST enthält einen Zeichengenerator Z, der durch die Codewörter CW adressiert wird und der den Formen der darzustellenden Zeichen zugeordnete Datenwörter enthält. Weiterhin enthält die Anzeigeeinrichtung eine Schaltstufe S, mittels der es möglich ist, alle im Seitenspeicher SP gespeicherten Steuerzeichen einer Seite anzuzeigen.

Die Schaltstufe S enthält einen weiteren Zeichengenerator Z1, in dem, wie in Figur 3 bei b dargestellt, Sonderzeichen gespeichert sind, die mnemotechnische Abkürzungen enthalten. Nach dem Betätigen eines entsprechenden Schalters an der Tastatur TA gibt dieser ein Signal S1 an die Schaltstufe S ab.

Das Signal S1 wird einem ersten Eingang eines UND-Glieds U zugeführt, an dessen zweitem Eingang die Codewörter CW anliegen und dessen Ausgang mit dem Adresseneingang des Zeichengenerators Z1 verbunden ist. Wenn bei der Dar-

0057754

stellung des Bildschirminhalts die Codewörter CW der Zeichen und der Steuerzeichen aus dem Seitenspeicher SP ausgelesen werden, erfolgt unter Verwendung des Zeichengenerators Z in der Bildsteuereinheit BST eine Anzeige der Zeichen am Bildschirm BS. Wenn die einem Steuerzeichen zugeordneten Codewörter CW aus dem Seitenspeicher SP gelesen werden, sind im Zeichengenerator Z keine entsprechenden Datenwörter gespeichert, so daß dieser keine Videosignale abgibt. Da die Codewörter CW über das UND-Glied U dem Zeichengenerator Z1 zugeführt werden und dieser die Steuerzeichen darstellende Sonderzeichen enthält, werden beim Auslesen der entsprechenden Codewörter CW aus dem Seitenspeicher SP aus dem Zeichengenerator Z1 die den Sonderzeichen zugeordneten Datenwörter ausgelesen und als Signale S2 der Bildsteuereinheit BST zugeführt. Diese erzeugt entsprechende Videosignale, gibt sie an die Anzeigeeinheit AE ab, um die Sonderzeichen am Bildschirm darzustellen.

Falls eine gleichzeitige Darstellung der alphanumerischen Zeichen und der graphischen Zeichen nicht erwünscht ist, kann das Signal S1 auch der Bildsteuereinheit BST zugeführt werden, um dort den Zeichengenerator Z zu sperren. In diesem Fall werden dann nicht mehr die Zeichen und die Sonderzeichen, sondern nur noch die Zeichen dargestellt.

Mit Hilfe des Verfahrens und der Anordnung ist es auch möglich, außer den Steuerzeichen auch diejenigen Stellen am Bildschirm BS zu kennzeichnen, bei denen graphische Muster punktweise im selben Raster dargestellt werden wie die alphanumerischen Zeichen. Diese graphischen Muster sind üblicherweise in einem Schreib/Lesespeicher gespeichert und werden unter vorgegebenen Adressen dort aufgerufen (DRCS, dynamically redefinable character set). An den entsprechenden Stellen im Seitenspeicher sind dann die Adressen dieser Muster gespeichert. Falls diese
Adressen mittels der Tastatur aufgerufen werden, werden
die Stellen am Bildschirm BS angezeigt, an denen die entsprechenden graphischen Muster dargestellt werden.

8 Patentansprüche
4 Figuren

Patentansprüche

1. Verfahren zum Darstellen von Steuerzeichen an einem Bildschirm einer Anzeigeeinrichtung, die einen Seitenspeicher enthält, in dem Codewörter speicherbar sind, die am Bildschirm anzeigbaren alphanumerischen und/oder graphischen Zeichen und die Eigenschaften dieser Zeichen bestimmenden Steuerzeichen zugeordnet sind, die eine Tastatur enthält, mittels der die den Zeichen und den Steuerzeichen zugeordneten Codewörter in den Seitenspeicher eingebbar sind und die eine mit dem Zeichengenerator versehene Bildsteuereinheit enthält, die die Darstellung der Zeichen am Bildschirm steuert,
d a d u r c h   g e k e n n z e i c h n e t ,
daß nach dem Betätigen eines den Steuerzeichen zugeordneten Schalters an der Tastatur (TA) an allen Stellen am Bildschirm (BS), die einem Steuerzeichen im Seitenspeicher (SP) zugeordnet sind, Sonderzeichen dargestellt werden, die die jeweiligen Steuerzeichen kennzeichnen.

2. Verfahren nach Anspruch 1,
d a d u r c h   g e k e n n z e i c h n e t ,
daß während der Darstellung der Sonderzeichen auch die alphanumerischen und/oder graphischen Zeichen dargestellt werden.

3. Verfahren nach Anspruch 1,
d a d u r c h   g e k e n n z e i c h n e t ,
daß während der Darstellung der Sonderzeichen die Darstellung der alphanumerischen und/oder graphischen Zeichen gesperrt wird.

4. Verfahren nach einem der Ansprüche 1 bis 3,
d a d u r c h   g e k e n n z e i c h n e t ,
daß gleichzeitig mit der Darstellung der Sonderzeichen am Bildschirm (BS) in einer zusätzlichen Anzeigezeile ein die entsprechenden Steuerzeichen kennzeichnende Texte dargestellt werden.

5. Verfahren nach einem der Ansprüche 1 bis 4,
d a d u r c h   g e k e n n z e i c h n e t ,
daß als Sonderzeichen im Zeichengenerator (Z) gespeicherte Zeichen vorgesehen sind, die in besonderer Weise dargestellt werden.

6. Verfahren nach einem der Ansprüche 1 bis 4,
d a d u r c h   g e k e n n z e i c h n e t ,
daß als Sonderzeichen weitere Zeichen vorgesehen sind, die die Funktion des entsprechenden Steuerzeichens mnemotechnisch abgekürzt angeben.

7. Schaltungsanordnung zur Durchführung des Verfahrens nach Anspruch 1,
d a d u r c h   g e k e n n z e i c h n e t ,
daß eine Schaltstufe (S) vorgesehen ist, der bei der Darstellung der den Steuerzeichen zugeordneten Stellen am Bildschirm (BS) von der Tastatur (TA) ein Signal (S1) zugeführt wird und die beim Auslesen eines einem Steuerzeichen zugeordneten Codewortes (CW) aus dem Seitenspeicher (SP) an die Bildsteuereinheit (BST) ein die Darstellung des Sonderzeichens am Bildschirm (BS) auslösendes Signal (S2) abgibt.

8. Schaltungsanordnung nach Anspruch 7,
d a d u r c h   g e k e n n z e i c h n e t ,
daß ein weiterer Zeichengenerator (Z1) vorgesehen ist, in dem den Sonderzeichen zugeordnete Datenwörter gespeichert sind und der die Datenwörter (S2) an die Bildsteuereinheit (BST) abgibt, wenn den Steuerzeichen zugeordnete Codewörter (CW) aus dem Seitenspeicher (SP) ausgelesen werden.

FIG 1

a    A B C    G

b | ⌣ | α rot | Bl ein | ⌣ | ⌣ | A | B | C | ⌣ | Gr gn | sep Gr | | |

c | ⌣ | Bl ein | sep Gr | α rot | ⌣ | A | B | C | ⌣ | Gr gn | ⌣ | | |

FIG 2

a    A B C

b | ⌣ | Bl ein | sep Gr | α rot | Bl aus | A | B | C | con Gr | Gr gn | Bl ein | | |

c | ⌣ | ⌣ | ⌣ | α rot | ⌣ | A | B | C | ⌣ | Gr gn | Bl ein | | |

FIG 3

a    HZA    A B C    R

b    Bl sGαr      Gg

0057754

FIG 4